# EUROPÄISCHE PATENTSCHRIFT

(11) **EP 1 493 007 B1**
(45) Veröffentlichungstag und Bekanntmachung des Hinweises auf die Patenterteilung: **02.11.2005**
(21) Anmeldenummer: 03745764.5
(22) Anmeldetag: 11.03.2003
(51) Int. Cl.: G01L 21/10, F16L 59/06, G01N 25/18, G01M 3/26

(54) **GASDRUCK IN EINER EVAKUIERTEN WÄRMEDÄMMPLATTE (VAKUUM PANEEL) DURCH EINGEBAUTE WÄRMESENKE UND PROBESCHICHT**
DETERMINATION OF THE GAS PRESSURE IN AN EVACUATED THERMAL INSULATING BOARD (VACUUM PANEL) BY USING A HEAT SINK AND TEST LAYER THAT ARE INTEGRATED THEREIN
DETERMINATION DE LA PRESSION DE GAZ DANS UN PANNEAU CALORIFUGE A VIDE A L'AIDE D'UN DISSIPATEUR THERMIQUE ET D'UNE COUCHE D'ESSAI INTEGRES

(30) Priorität: 06.04.2002 DE 10215213
(43) Veröffentlichungstag der Anmeldung: 05.01.2005
(73) Patentinhaber: va-Q-tec AG, 97080 Würzburg (DE)
(72) Erfinder: CAPS, Roland, 63839 Kleinwallstadt (DE)
(74) Vertreter: Küchler, Stefan
(86) Internationale Anmeldenummer: PCT/EP2003/002482
(87) Internationale Veröffentlichungsnummer: WO 2003/085369

(56) Entgegenhaltungen:
- DE-A- 10 117 021
- JP-A- 10 239 199
- JP-A- 62 215 194

## Beschreibung

Die Erfindung richtet sich auf eine Vorrichtung für ein thermisches Messverfahren zur Bestimmung des Gasdruckes in einer evakuierten Wärmedämmplatte mit einem von einer Folie umhüllten Dämmkem, sowie auf ein Verfahren zur Messung des Gasdruckes in einer evakuierten Wärmedämmplatte.

Evakuierte Wärmedämmplatten oder Vakuumpaneele erzielen eine hohe Dämmwirkung mit kleinsten Dämmstärken. Sie bestehen zumeist aus einem evakuierbaren, porösen Kemmaterial geringer Wärmeleitfähigkeit und einer vakuumdichten Umhüllung, z. B. einer metallisierten Hochbarrierefolie aus Kunststoff. Als Kemmaterial haben sich für Anwendungen, bei denen es auf eine sehr lange Lebensdauer ankommt, z.B. im Gebäudebereich, mikroporöse Kieselsäurepulver als vorteilhaft herausgestellt. Für andere Anwendungen mit geringerer Nutzungsdauer können als Dämmkern auch offenporige Schäume aus Polyurethan und/oder Polystyrol oder Glasfasermaterialien verwendet werden. Um die Wärmeleitfähigkeit der Luft in den Kemmaterialien praktisch auszuschalten, reicht bei mikroporösen Kemen aufgrund ihrer extrem kleinen Porengröße von weniger als einem halben Mikrometer schon ein Vakuum von 1 bis 10 mbar aus. In diesem Druckbereich wird eine Wärmeleitfähigkeit zwischen 0,004 und 0,005 W/(m*K) erreicht. Eine Erhöhung des Gasdruckes auf 100 mbar läßt die Wärmeleitfähigkeit nur auf ca. 0,008 W/(m*K) ansteigen, bei normalem Luftdruck von 1000 mbar beträgt die Wärmeleitfähigkeit 0,020 W/(m*K). Bei offenporigen Schäumen oder Glasfasermaterialien müssen aufgrund der gröberen Poren die Gasdrücke dagegen im Bereich von 0,01 bis 1 mbar liegen, um die Wärmeleitfähigkeit der Luft weitgehend zu unterdrücken.

Die Güte und einwandfreie Funktion der Vakuumdämmung kann an der Höhe der Wärmeleitfähigkeit oder des bestehenden Innengasdruckes festgestellt werden. Eine Messung der Wärmeleitfähigkeit ist an einzelnen Vakuumdämmplatten mit üblichen stationären Plattenmessverfahren möglich. Diese Messungen sind recht langwierig; die relative Genauigkeit des Verfahrens kann jedoch unterhalb von 5%, bezogen auf die absolute Wärmeleitfähigkeit, sein. Bisherige instationäre Verfahren, bei denen z.B. einer Platte ein Wärme- oder Temperaturpuls aufgeprägt wird und Größen wie Temperatur oder Wärmeflüsse zeitabhängig gemessen werden, sind schneller, jedoch sehr fehlerbehaftet und ungenau, u.a. auch deshalb, weil die Messgrößen nur von der Wurzel aus der Wärmeleitfähigkeit des Dämmkerns abhängen.

Am genauesten kann die Güte einer mikroporösen Vakuumdämmplatte anhand des Wertes des Innengasdruckes beurteilt werden. Der Anfangsgasdruck beträgt nach der Herstellung einer mikroporösen Vakuumdämmplatte typischerweise zwischen 1 und 5 mbar. Verwendet man eine geeignete Hochbarrierefolie, so sollte der Gasdruck im Inneren pro Jahr nicht mehr als 0,2 bis 2 mbar ansteigen. Frühestens nach 50 Jahren sollte somit rechnerisch eine Verdoppelung der Wärmeleitfähigkeit in mikroporösen Wärmedämmplatten eingetreten sein. Eine Information über die Höhe des Gasdruckes bzw. des zeitlichen Anstieges auch im eingebauten Zustand ist für eine Qualitätssicherung der Vakuumdämmplatten sehr aussagekräftig.

Der Innengasdruck der Vakuumpaneele kann dadurch kontrolliert werden, dass das Testobjekt in eine Vakuumkammer gelegt und so lange evakuiert wird, bis sich merklich die Umhüllungsfolie vom Dämmkern abhebt. In diesem Fall wird nämlich der Innendruck im Paneel gerade größer als der Gasdruck in der Vakuumkammer. Diese Methode erfordert allerdings eine Vakuumdämmkammer mindestens in der Größe der Paneele. Zudem kann der Gasdruck einer ausgelieferten oder bereits in ein Dämm-Objekt eingebauten Vakuumdämmplatte nicht mehr bestimmt werden, so dass für diesen Zweck andere Methoden gefunden werden müssen.

Gemäß den obigen Ausführungen besteht das die Erfindung initiierende Problem darin, eine Möglichkeit zu schaffen, wie auch an ausgelieferten und/oder in ein Dämmobjekt eingebauten Vakuumdämmplatten der Gasdruck bestimmt werden kann, nach Möglichkeit mit einer hohen Meßgenauigkeit. Bei einer solchen Kontrolle des Gasdruckes darf die Umhüllung nicht beschädigt werden. Der technische Aufwand der Messung soll möglichst gering gehalten werden, insbesondere soll die für die Messung benötigte Zeit möglichst kurz sein. Ferner soll nach Möglichkeit darauf geachtet werden, dass auch die Herstellungskosten der Vakuumpaneele nicht wesentlich erhöht werden.

Die Lösung dieses Problems gelingt nach den Ansprüchen 1,5. Eine Meßvorrichtung, umfassend eine zwischen Dämmkern und Umhüllungsfolie der Wärmedämmplatte eingebaute Anordnung mit einem als Wärmesenke wirkenden Körper, dessen Wärmeleitfähigkeit und volumenbezogene Wärmekapazität größer sind als die betreffenden Größen des Dämmkerns, und mit einer zwischen der Wärmesenke und der Umhüllungsfolie angeordneten Probeschicht mit einer definierten Wärmeleitfähigkeit, die sich als Funktion des Gasdruckes in der evakuierten Wärmedämmplatte ändert.

Der Wärmewiderstand der Probeschicht bzw. deren Wärmeleitfähigkeit hängt in charakteristischer Weise vom Gasdruck im Inneren des Paneels ab. Für Glasfaservliese mit Faserdurchmessern von etwa 10 µm beträgt der typische Gasdruck, bei dem etwa die Hälfte der Wärmeleitfähigkeit von ruhender Luft bei Normaldruck erreicht wird, etwa 2 mbar. Bei einer Variation des Gasdruckes um und unterhalb dieses Druckbereichs wird sich der Wärmewiderstand der Zwischenschicht am deutlichsten ändern. Würde dagegen die Wärmeleitfähigkeit des Dämmkerns aus z.B. mikroporöser Kieselsäure gemessen, so wäre erst bei einem Gasdruck oberhalb von 10 mbar eine deutliche Änderung der Wärmeleitfähigkeit erkennbar. Aus dem Verhältnis zwischen der mittleren Temperaturdifferenz zwischen der Wärmesenke und der Sensorkomponente und dem gemessenen Wärmestrom während der Messung kann der Wärmewiderstand der Probeschicht berechnet werden. Kennt man die Dicke der Probeschicht, ergibt sich daraus auch deren Wärmeleitfähigkeit. In Kenntnis der Abhängigkeit der Wärmeleitfähigkeit der Probeschicht von dem Gasdruck in dem Vakuumpaneel kann alsdann der Gasdruck in dem Vakuumpaneel bestimmt werden. Es ist aber auch möglich, den gemessenen Wärmewiderstand mit Hilfe einer Kalibiermessung, bei dem ein bekannter Gasdruck vorgegeben wird, direkt mit dem inneren Gasdruck in Beziehung zu setzen.

Auch für grobporige Kernmaterialien wie offenporige Polyurethanschäume oder Glasfasern läßt sich das erfindungsgemäße Verfahren anwenden. Die mit dem erfindungsgemäßen Verfahren gemessene Wärmeleitfähigkeit eines in der Probeschicht eingesetzten, grobporigen Materials ändert sich hier in ähnlicher Weise wie die Wärmeleitfähigkeit des im Vakuumpaneel als Dämmkern verwendeten, grobporigen Materials. Eine um 20 % gegenüber dem voll evakuierten Zustand erhöhte Wärmeleitfähigkeit des Kernmaterials aufgrund eines nicht ausreichend niedrigen Gasdruckes kann damit ohne weiteres festgestellt werden.

Der Wärmewiderstand der Probeschicht kann bspw. dadurch gemessen werden, dass von außen ein Temperatursprung aufgeprägt wird und der Wärmestrom über die Probeschicht zu der hinter der Probeschicht befindlichen Wärmesenke bestimmt wird. Es soll allerdings darauf hingewiesen werden, dass eine Messung auch bei einem umgekehrten Wärmestrom möglich ist, bspw. durch anfängliches Erwärmen des hinter der Probeschicht liegenden Körpers und anschließendes Anpressen eines kühleren Sensorkörpers an die betreffende Stelle der Umhüllung der Wärmedämmplatte, so dass sich ein Wärmestrom von innen nach außen einstellt. Eine gegenüber dem innenliegenden Körper reduzierte Sensortemperatur kann auch dadurch realisiert werden, dass der Sensorkörper vor der Messung gekühlt wird, bspw. mit Eis. Obwohl bei dieser Meßmethode nun der oben als Wärmesenke bezeichnete Körper hinter der Probeschicht eigentlich als Wärmequelle wirkt und der von außen angelegte Sensorkörper als Wärmesenke, ist diese Methode jedoch i.a. (zeitlich) aufwendiger als das Verfahren mit dem anfangs beschriebenen Wärmestrom von außen nach innen, und deshalb soll ohne Beschränkung der Allgemeinheit der hinter der Probeschicht liegende Körper im folgenden als Wärmesenke bezeichnet werden.

Da die Ausstattung eines Vakuumpaneels mit der innenliegenden Wärmesenke sehr kostengünstig ist, können Vakuumpaneele im Prinzip standardmäßig damit ausgerüstet werden. Damit ist auch schnelle In-line-Kontrolle des Gasdrucks nach der Herstellung der Vakuumpaneele möglich.

Es hat sich als günstig erwiesen, dass die Wärmeleitfähigkeit der Wärmesenke oberhalb von 1 W/(m*K) liegt, vorzugsweise bei mehr als 2 W/(m*K), insbesondere bei mehr als 10 W/(m*K). Dadurch kann die von der Wärmesenke aufgenommene Wärme schnell und gleichmäßig über deren gesamten Körper verteilt werden, und unterhalb der Probeschicht kann kein die Messung verfälschender Wärmestau auftreten.

Eine günstige Anordnung ergibt sich, wenn die Wärmeleitfähigkeit der Wärmesenke mehr als 10 mal so groß ist wie die Wärmeleitfähigkeit der Probeschicht bei einem Gasdruck von weniger als 100 mbar, vorzugsweise mehr als 20 mal, insbesondere mehr als 50 mal so groß. Durch eine vergleichsweise, geringe Wärmeleitfähigkeit der Probeschicht ergeben sich nahezu ideale Wärmeströmungsverhältnisse, welche eine optimale Auswertung erlauben.

Es liegt im Rahmen der Erfindung, dass die Wärmeleitfähigkeit der Probeschicht bei oder unter dem atmosphärischen Gasdruck unterhalb von 1 W/(m*K) liegt, vorzugsweise unterhalb von 0,1 W/(m*K), insbesondere unterhalb von 0,05 W/(m*K). Vorzugsweise nimmt die Wärmeleitfähigkeit der Probeschicht mit sinkendem Gasdruck ab, bspw. bei einer Druckreduzierung auf jeweils ein Zehntel um je 10 bis 75 %, vorzugsweise um 20 bis 50 %. Dadurch liegt der Wärmewiderstand in dem interessierenden Druckbereich noch deutlich höher und erlaubt aufgrund langsamerer Temperaturänderungen der Wärmesenke genauere Messungen.

Eine Möglichkeit zur Realisierung einer Gas-Druckabhängigkeit der Wärmeleitfähigkeit der Probeschicht liegt darin, diese aus einem offenporigen Material herzustellen. Die Probeschicht sollte andererseits möglichst homogene Eigenschaften aufweisen, damit sich zuverlässige Meßwerte ergeben.

Die Porengröße der offenporigen Probeschicht kann deutlich größer sein als die des Dämmkerns, so dass die Gaswärmeleitfähigkeit in der Probeschicht sich schon bei deutlich kleineren Gasdrücken als im Dämmkern bemerkbar macht. Um einen niedrigeren Gasdruckbereich erfassen zu können, sollte als Probeschicht zur Umhüllungsfolie ein Material mit gröberen Strukturen verwendet werden. Bei faserartigen Stoffen oder Faservliesen bspw. aus Glasfasern kann durch Wahl eines kleineren oder größeren Faserdurchmessers der Bereich des detektierbaren Gasdrucks zu größeren oder kleineren Drucken hin verschoben werden.

Es liegt im Rahmen der Erfindung, dass die Probeschicht aus einem Polypropylen- oder Polyester-Faservlies, aus Microglasfaserpapier, aus Glasfaservlies, aus einer dünnen Lage eines offenporigen Schaumstoffes, aus einer Schicht Aerogel, aus Kieselgur oder einem anderen gepressten feinen Pulver besteht. Erfindungsgemäß zeigen die besten Eigenschaften Faservliese aus Kunststoff oder Glas mit Faserdurchmessern im Bereich von 0,1 µm bis 20 µm. Prinzipiell sind jedoch auch andere Materialien wie offenporige Kunststoffschäume, feine Pulver wie Kieselgur oder Aerogelschichten als Probeschicht möglich.

Für die thermische Messung ergeben sich relativ große Wärmeströme, die gut zu messen sind, wenn die Stärke der Probeschicht etwa konstant ist und etwa in dem Bereich von 0,05 mm bis 2 mm liegt, bevorzugt bei mehr als 0,08 mm, insbesondere bei mehr als 0,1 mm sowie unterhalb von 1 mm, insbesondere bei weniger als 0,5 mm.

Die volumenbezogene Wärmekapazität C der Wärmesenke liegt erfindungsgemäß zwischen 0,5 J/(cm³*K) und 5,0 J/(cm³*K), vorzugsweise zwischen 1,0 J/(cm³*K) und 4,0 J(cm³*K). Solchenfalls läßt sich auch mit einer platzsparenden Probeanordnung eine für eine genaue Messung ausreichende Dauer des Wärmestroms realisieren.

Für die Wärmesenke empfiehlt sich die Verwendung von Metallen wie Aluminium, Kupfer, Eisen, einer gut wärmeleitenden Keramik oder Graphit.

Zur Erhöhung der Meßgenauigkeit läßt sich die Wärmesenke als Flachkörper mit zu der Umhüllung bzw. Probeschicht etwa paralleler Grundebene realisieren. Dabei kann die Stärke einer solchen, flächigen Wärmesenke etwa konstant sein. Sie sollte etwa zwischen 0,1 mm und 5 mm liegen, bevorzugt oberhalb von 0,2 mm, insbesondere bei mehr als 0,4 mm, und vorzugsweise unterhalb von 3 mm, insbesondere bei weniger als 2 mm.

Der Umriß der flächigen Wärmesenke kann rund oder mehreckig, insbesondere rechteckig oder quadratisch, ausgeführt sein, wobei der Durchmesser bzw. die Kantenlängen zwischen 5 mm und 100 mm, bevorzugt von 10 mm bis 60 mm, insbesondere etwa 30 mm, beträgt (betragen).

Die Wärmesenke kann an der Ober- und/oder Unterseite der Vakuumdämmplatte angeordnet sein, aber auch an deren Schmalseiten. Kanten oder Ecken der Vakuumdämmplatte eignen sich zwar prinzipiell auch, bedingen jedoch eine komplexere Anordnung.

Werden relativ grobporige Schäume oder Glasfasermaterialien als Dämmkerne verwendet, so besteht auch die Möglichkeit, den Boden des eingelegten Behälters für Gettermaterialien als Wärmesenke zu verwenden. Zur Erfassung eines niedrigeren Gasdruckbereichs kann als Probeschicht ein Material mit gröberen Strukturen verwendet werden, bspw. ein Glasfaservlies mit einem Faserdurchmesser um 10 i m.

Das erfindungsgemäße Verfahren zur Bestimmung des Gasdruckes in einer folienumhüllten, evakuierten Wärmedämmplatte zeichnet sich dadurch aus, dass an eine gemäß obiger Beschreibung innerhalb der evakuierten Wärmedämmplatte angeordnete, von der Umhüllungsfolie abgedeckte Vorrichtung von außen eine Sensoreinrichtung angelegt und ein Temperatursprung an der Umhüllungsfolie erzeugt wird. Dies kann durch einen Körper mit einer deutlichen Temperaturdifferenz zu der erfindungsgemäßen Vorrichtung erreicht werden, der aufgepreßt wird. Dadurch wird ein Wärmestrom in Abhängigkeit von der durch den Gasdruck im Inneren der Wärmedämmplatte beeinflußten Wärmeleitfähigkeit der Probeschicht hervorgerufen, dessen Größe messtechnisch erfasst oder indirekt aus anderen, messtechnisch erfaßbaren Größen bestimmt wird.

Ein einfaches Verfahren, gleichzeitig die Temperatur an der Oberfläche und den Wärmestrom zur Wärmesenke zu messen, besteht darin, einen Wärme gut leitenden Sensorkörper, der eine Temperaturdifferenz zu der innenliegenden Wärmesenke aufweist, und an welchem ein Temperaturmessfühler angebracht ist, auf die Oberfläche des Vakuumpaneels zu pressen. Bevorzugt ist dabei die Temperatur des Sensorkörpers größer als die der in der Wärmedämmplatte liegenden Wärmesenke. Nach dem Aufpressen der Sensoreinrichtung gibt diese Wärme an die innenliegende Wärmesenke ab. Dadurch verringert sich die Temperatur des anliegenden Teils der Sensoreinrichtung mit der Zeit. Dabei stellt sich aufgrund der geringen Wärmekapazität der Umhüllungsfolie und der dünnen Probeschicht schnell (etwa innerhalb von etwa 1 bis 3 sec) ein thermisches Gleichgewicht ein: Ändert sich die aufgeprägte Temperatur und die Temperatur der innenliegenden Wärmesenke im Verhältnis zur Temperaturdifferenz nur wenig mit der Zeit, so kann man von quasistationären Zuständen ausgehen. Die Messung des zeitlichen Temperaturverlaufes kann i.a. dann beendet werden, wenn die Temperatur der Sensorkomponente bzw. Wärmequelle und/oder der Wärmesenke sich um ca. 2 bis 20%, vorzugsweise 5 bis 10 % der ursprünglichen Temperaturdifferenz geändert hat. Typische Messzeiten liegen im Bereich 5 s bis 30 s. Aus der spezifischen Wärmekapazität des Materials der anliegenden Sensorkomponente und deren Abmessungen sowie der Temperaturänderung pro Zeiteinheit kann der Wärmestrom berechnet werden. Der Wärmewiderstand der Probeschicht ist dann proportional zu dem Verhältnis aus der Differenz zwischen der Temperatur der Wärmesenke und der Temperatur der von außen angelegten Sensoreinrichtung einerseits und dem gemessenen Wärmestrom andererseits. Die innere Wärmesenke sollte sich vor Beginn der Messung im thermischen Gleichgewicht mit dem Dämmkern befinden. Ihre Temperatur wird vor Messbeginn z.B. mit einem Oberflächentemperaturfühler bestimmt. Die Temperatur der Sensorkomponente kann über eine elektrische Heizung mittels einer aufgebrachten, dünnen Heizfolie auf den Ausgangswert geregelt werden. Bei Beginn der Messung muß die Leistungszufuhr abgeschaltet werden. Eine andere Möglichkeit ist, die Meßplatte durch Kontakt mit einem heißen Gegenstand auf die Starttemperatur zu bringen.

Bevorzugt weist der Sensorkörper eine vordere Anlagefläche auf, deren Wölbung etwa der Wölbung der Probeschicht unterhalb der Umhüllungsfolie entspricht.

Der Sensorkörper kann als Quader oder Prisma oder als (flacher) Zylinder bzw. runde Scheibe, oder als sonstiger Flachkörper ausgebildet sein.

Die Stärke eines solchen Flachkörpers sollte zwischen 0,2 und 100 mm liegen, vorzugsweise oberhalb von 0,5 mm, insbesondere bei mehr als 1 mm, sowie vorzugsweise unterhalb von 10 mm liegen, insbesondere bei weniger als 5 mm.

Die Erfindung empfiehlt, die Grundfläche des Sensorkörpers kleiner oder etwa gleich der Fläche der Wärmesenke zu wählen, d.h., der Durchmesser des Sensorkörpers sollte nicht größer sein als der Wärmesenke. Dadurch werden unnötige, die Messung ggf. verfälschende Sekundäreffekte vermieden.

Die Wärmeleitfähigkeit des Sensorkörpers kann etwa der Wärmeleitfähigkeit der innerhalb einer Wärmedämmplatte angeordneten Wärmesenke entsprechen. Das Material des Sensorkörpers ist vorzugsweise ein gut wärmeleitendes Metall wie Kupfer, Silber, Aluminium oder Eisen bzw. Stahl.

Die Erfindung zeichnet sich weiterhin aus durch einen Temperatursensor, der an dem Sensorkörper, insbesondere an dessen Oberfläche, oder im Volumen des Sensorkörpers befestigt ist. Als Temperatursensor kann z.B. ein Thermoelement benutzt werden, das die Wärmekapazität der Sensorkomponente nur wenig beeinflußt.

Eine weitere Möglichkeit, den Wärmestrom der Sensorkomponente zu messen, besteht darin, den Sensorkörper zur Aufrechterhaltung einer vorgebbaren Temperatur mit einer geregelten, elektrischen Heizung zu versehen, bspw. mit einem Heizwiderstand oder einer Heizfolie. Über diesen Regler wird die Temperatur der Sensorkomponente auf einem konstanten Wert gehalten und die während des Meßvorgangs über den Regler an die Sensorkomponente abgegebene Leistung beobachtet. Nach einer kurzen Einregelzeit wird sich als an die Sensorkomponente abgegebene Leistung ebenfalls der quasistationäre Wärmestrom einstellen.

Es ist auch möglich, als Sensorkörper allein eine Heizfolie mit Temperatursensor zu verwenden. Bei Meßbeginn wird die Heizung zugeschaltet und über eine Regelung eine konstante, erhöhte Temperatur angesteuert und die dazu erforderliche Leistung gemessen. Die Heizfolie kann dauerhaft auf der Umhüllungsfolie über der Wärmesenke angebracht sein.

Die Erfindung läßt sich dahingehend weiterbilden, dass der Sensorkörper rückseitig und/oder seitlich von einem Wärmedämmstoff umgeben ist. Um das Ergebnis verfälschende Wärmeverluste des Sensorkörpers an die Umgebung zu verringern, ist dieser - mit Ausnahme seiner Anlagefläche - von einer Wärmeisolation, z.B. einem Schaumstoff, umgeben.

Schließlich entspricht es der Lehre der Erfindung, dass bei der Messung der Sensorkörper von einer dosen-, ring- oder scheibenförmigen, ggf. metallischen Hülle umgeben ist, die auf etwa der gleichen Ausgangstemperatur wie der Sensorkörper gehalten wird. Als Hülle kann auch eine temperaturgeregelte Heizfolie dienen. Dieser, auf die gleiche Temperatur wie beim Sensorkörper geheizte Schutzschirm kann Wärmeabflüsse von dem Sensorkörper zur Umgebung oder seitlich über die Umhüllungsfolie weitgehend unterdrücken.

Eine alternative Methode zur Bestimmung des Wärmestroms besteht darin, auf der Anlagefläche des Sensorkörpers einen Wärmeflußmesser zu befestigen. Der Sensorkörper ist vorzugsweise an einer gegebenenfalls elektrisch geregelten Wärmequelle oder -senke angekoppelt, z.B. einer Heizfolie, so dass er auf einer konstanten Temperatur gehalten wird. Aus der gemessenen Wärmeflussdichte und der Temperaturdifferenz zwischen Wärmesenke und Sensorkörper kann sodann ebenfalls auf den Wärmewiderstand der Probeschicht geschlossen werden. Der Wärmeflußmesser sollte einen möglichst geringen Wärmewiderstand gegenüber der belüfteten Probeschicht aufweisen, maximal etwa 10 % bis 20 % desselben.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Schnitt durch eine evakuierte Wärmedämmplatte mit einer darin aufgenommenen, erfindungsgemäßen Meß- bzw. Probeanordnung und einer darauf gesetzten Sensoreinrichtung; sowie
- Fig. 2: eine graphische Darstellung der zeitlichen Verläufe einer mit der Sensoreinrichtung aus Fig. 1 gemessenen Temperatur bei unterschiedlichem Gasdruck innerhalb der Wärmedämmplatte.

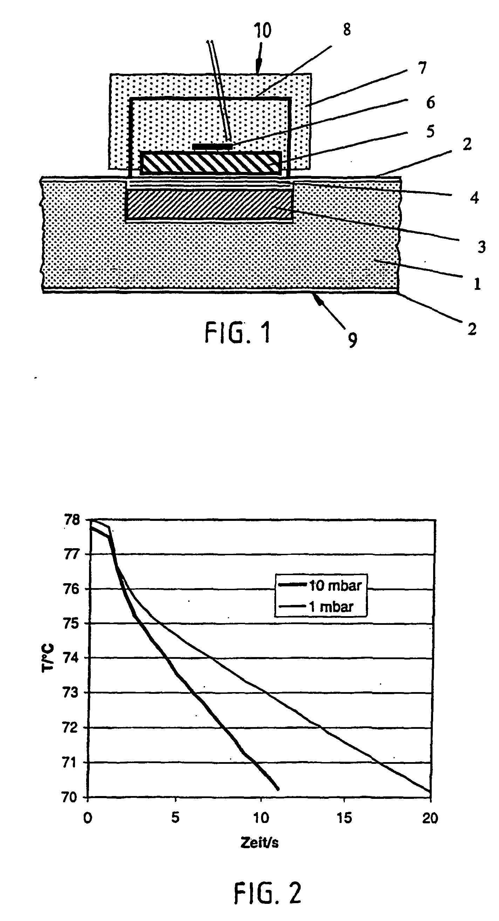

Die Wärmedämmplatte 9 aus Figur 1 besteht aus einem Dämmkern 1, der allseits von einer Folie 2 umhüllt ist. Erfindungsgemäß wird zwischen diesen Dämmkern 1 und die Umhüllungsfolie 2 bei der Herstellung eine kleinen Metall- oder Keramikplatte 3 eingebracht, bspw. aus Aluminium, die als Wärmesenke dient. Diese Platte 3 kann eine runde, rechteckige oder quadratische Grundform haben mit einem Durchmesser oder einer Kantenlänge von z.B. 30 mm und eine Stärke von bspw. 2 mm.

Zwischen der Wärmesenke 3 und der Umhüllungsfolie 2 befindet sich erfindungsgemäß als Wärmewiderstand eine Probeschicht in Form einer dünnen, porösen Zwischenschicht 4. Die Porengröße der offenporigen Probeschicht 4 kann deutlich größer sein als die des Dämmkerns 1, so dass die Gaswärmeleitfähigkeit in der Probeschicht 4 sich schon bei deutlich kleineren Gasdrücken als im Dämmkern 1 bemerkbar macht. Die Probeschicht 4 weist eine Stärke von nur ca. 0,1 mm bis 0,3 mm auf. Für die thermische Messung ergeben sich damit relativ große Wärmeströme, die gut zu messen sind. Die Probeschicht 4 sollte trotz ihrer kleinen Dicke möglichst homogen aber offenporig sein. Erfindungsgemäß zeigen die besten Eigenschaften Faservliese aus Kunststoff oder Glasfasern mit sehr kleinen Faserdurchmessern im Bereich von 0,1 µm bis 20 µm. Prinzipiell sind jedoch auch andere Materialien wie offenporige Kunststoffschäume, feine Pulver wie Kieselgur oder Aerogelschichten als Zwischenlagen geeignet.

Nachdem die Wärmesenke 3 mit einer Lage eines Glasfaservlieses als Probeschicht belegt und zwischen Dämmkern und Umhüllungsfolie in eine kleine Vertiefung eingelegt worden ist, derart, dass die Probeschicht 4 nach außen weist und an der Innenseite der Umhüllungsfolie 2 anliegt, wird der Dämmkern 1 auf einen Gasdruck von etwa 1 mbar evakuiert und die Umhüllungsfolie 2 aus Kunststoff wird vakuumdicht versiegelt.

Als Sensor 10 wird einer Scheibe oder Platte 5 aus verkupfertem Stahl mit einer Stärke von 1,7 mm und einem Durchmesser von 19 mm verwendet und auf dessen Rückseite als Temperaturmeßfühler 6 ein Thermoelement Typ J aufgelötet. Auf die Rückseite wird als Wärmeisolation 7 weiterhin ein rundes Stück Schaumstoff mit der Stärke 20 mm und einem Durchmesser von 20 mm aufgeklebt. Zusätzlich kann ein auf die gleiche Ausgangstemperatur geheizter Schutzring 8 Wärmeabflüsse von der Sensorplatte 5 zur Umgebung oder seitlich über die Umhüllungsfolie 2 weitgehend unterdrücken.

Die Temperaturen des Thermoelements 6 werden mit einer Rate von zwei Messungen pro Sekunde von einem Messgerät erfasst und von einem Rechner gespeichert.

Die Wärmesenke 3 befindet sich vor der Messung im thermischen Gleichgewicht mit der Umgebungstemperatur von etwa 20 °C. Die Sensorplatte 5 wird auf eine Temperatur von 78 °C erwärmt. Die Messung wird gestartet, wenn der Sensor 10 auf die Meßstelle an der Dämmplatte 9 aufgedrückt wird. Nach etwa 20 Sekunden wird die Messung beendet und der Sensor 10 von der Meßstelle entfernt. Die Messung wird sodann mit einem weiteren Probestück wiederholt, das nur auf einen Gasdruck von 10 mbar evakuiert worden ist.

Die dabei gemessenen, unterschiedlichen Temperaturverläufe der Sensorplatte sind in der Figur 2 dargestellt. Man erkennt, dass die Temperatur bei höherem Gasdruck deutlich schneller sinkt. Unterhalb der Temperatur von 74 °C kann der Temperaturverlauf in etwa durch eine konstante Steigung beschrieben werden. Bei dem Gasdruck 10 mbar fällt die Temperatur um etwa 0,55 K/s, beim Gasdruck 1 mbar um 0,29 K/s. Dadurch kann eindeutig zwischen den beiden Gasdruckbereichen unterschieden werden.

## Patentansprüche

1. Vorrichtung für ein thermisches Messverfahren zur Bestimmung des Gasdruckes in einer evakuierten Wärmedämmplatte (9) mit einem von einer Folie (2) umhüllten Dämmkern (1), wobei eine zwischen Dämmkern (1) und Umhüllungsfolie (2) der Wärmedämmplatte (9) eingebaute Anordnung mit einem als Wärmesenke wirkenden Körper (3) vorliegt, dessen Wärmeleitfähigkeit und volumenbezogene Wärmekapazität größer sind als die betreffenden Größen des Dämmkerns (1), und mit einer zwischen dem Körper (3) und der Umhüllungsfolie (2) angeordneten Probeschicht (4) mit einer definierten Wärmeleitfähigkeit, die sich als Funktion des Gasdruckes in der evakuierten Wärmedämmplatte (9) ändert.

2. Vorrichtung nach Anspruch 1, wobei die Wärmeleitfähigkeit der Wärmesenke (3) oberhalb von 1 W/(m*K) liegt, vorzugsweise bei mehr als 2 W/(m*K), insbesondere bei mehr als 10 W/(m*K).

3. Vorrichtung nach Anspruch 1 oder 2, wobei die Wärmeleitfähigkeit der Wärmesenke (3) mehr als 10 mal, vorzugsweise 20 mal, insbesondere 50 mal so groß ist wie die Wärmeleitfähigkeit der Probeschicht (4) bei einem Gasdruck von weniger als 100 mbar.

4. Vorrichtung nach einem der Ansprüche 1 bis 3, wobei die Wärmeleitfähigkeit der Probeschicht (4) bei oder unter dem atmosphärischen Gasdruck unterhalb von 1 W/(m*K) liegt, vorzugsweise unterhalb von 0,1 W/(m*K), insbesondere unterhalb von 0,05 W/(m*K).

5. Verfahren zur Bestimmung des Gasdruckes in einer folienumhüllten, evakuierten Wärmedämmplatte (9), wobei an einer in der evakuierten Wärmedämmplatte (9) angeordneten, von der Umhüllungsfolie (2) abgedeckten Vorrichtung (3,4) nach einem der vorhergehenden Ansprüche von außen ein Temperatursprung gegenüber der Wärmesenke (3) aufgeprägt wird, so dass ein von dem in Abhängigkeit von dem Gasdruck im Inneren der Wärmedämmplatte (9) variierenden Wärmeleitfähigkeit der Probeschicht (4) beeinflußter Wärmestrom hervorgerufen wird, dessen Größe messtechnisch erfasst oder indirekt aus anderen, messtechnisch erfaßbaren Größen bestimmt wird.

6. Verfahren nach Anspruch 5, wobei ein Sensorkörper (5) mit einer vorderen Anlagefläche von außen über eine in der evakuierten Wäremdeämmplatte (9) angeordneten, von der Umhüllungsfolie (2) abgedeckten Probevorrichtung (3,4) nach einem der Ansprüche 1 bis 4 angelegt wird, wobei die Wölbung der vorderen Anlagefläche etwa der Wölbung der Probeschicht (4) unterhalb der Umhüllungsfolie (2) entspricht.

7. Verfahren nach Anspruch 5 oder 6, wobei ein Sensorkörper mit einer deutlichen Temperaturdifferenz zu der Probevorrichtung (3,4) auf die Umhüllungsfolie (2) aufgesetzt wird.

8. Verfahren nach einem der Ansprüche 5 bis 7, wobei der Sensorkörper (5) eine Wärmeleitfähigkeit von 1 W/(m*K) bis 1000 W/(m*K) aufweist.

9. Verfahren nach einem der Ansprüche 5 bis 8 unter Verwendung eines Temperatursensors (6), der an einer Oberfläche oder im Volumen des Sensorkörpers (5) befestigt ist, wobei der Wärmestrom anhand der (zeitlichen) Temperaturänderung des Sensorkörpers (5) beim Anlegen/-pressen an den Bereich der Dämmplatte (9) oberhalb der Wärmesenke (3) ermittelt wird.

10. Verfahren nach einem der Ansprüche 5 bis 9, wobei der Sensorkörper auf eine konstante Temperatur geregelt wird, die sich deutlich von der Temperatur der Wärmesenke (3) unterscheidet.

11. Verfahren nach Anspruch 10, wobei der Wärmestrom über die dem Sensorkörper (5) zugeführte Heizleistung bei konstant zu haltender Temperatur bestimmt wird.

12. Verfahren nach einem der Ansprüche 5 bis 11, wobei auf der Anlagefläche des Sensorkörpers (5) zur Messung des Wärmestroms ein Wärmeflussmesser angebracht und die Temperatur des Sensorkörpers konstant gehalten wird.

13. Verfahren nach Anspruch 5, wobei eine Heizfolie mit Temperaturfühler über der Probevorrichtung (3,4) auf die Umhüllungsfolie (2) aufgepreßt wird.

14. Verfahren nach Anspruch 13, wobei bei Meßbeginn eine Heizleistung in der Heizfolie zugeschaltet und so geregelt wird, dass bei einer konstant bleibenden Temperatur der Heizfolie deren Heizleistung gemessen werden kann.

15. Verfahren nach einem der Ansprüche 13 oder 14, wobei die Heizfolie von einem Dämmstoff abgedeckt ist.

16. Verfahren nach Anspruch 15, wobei mit Hilfe einer weiteren, regelbaren Heizeinrichtung über dem Dämmstoff der Wärmeverlust der Heizfolie zur Umgebung vermindert wird, so dass deren Heizleistung im wesentlichen dem Wärmestrom zur Wärmesenke entspricht.

## Claims

1. Apparatus for a thermal measurement method for determining the gas pressure in an evacuated thermal insulating board (9) with an insulating core (1) enclosed by a film (2), whereby there exists an assembly built-in between the insulating core (1) and the covering film (2) of the thermal insulation board, with a body (3) acting as heat sink, whose thermal conductivity and volume-related thermal capacity are greater than the respective values of the insulating core (1), and with a test layer (4) placed between the body (3) and the covering film (2) and having a defined thermal conductivity that varies as a function of the gas pressure within the evacuated thermal insulating board (9).

2. Apparatus according to claim 1, whereby the thermal conductivity of the heat sink (3) lies above 1 W/(m*K), preferably at more than 2 W/(m*K), and in particular at more than 10 W/(m*K).

3. Apparatus according to claim 1 or 2, whereby the thermal conductivity of the heat sink (3) is more than 10 times, preferably 20 times, and in particular 50 times, as large as the thermal conductivity of the test layer (4) at a gas pressure of less than 100 mbar.

4. Apparatus according to one of the claims 1 to 3, whereby, at or below atmospheric gas pressure, the thermal conductivity of the test layer (4) lies below 1 W/(m*K), preferably below 0.1 W/(m*K), and in particular below 0.05 W/(m*K).

5. Procedure for the determination of the gas pressure within a film enclosed evacuated thermal insulating board (9), whereby from outside a temperature jump relative to the heat sink (3) is impressed on an apparatus (3,4) according to one of the preceeding claims, which is situated in the evacuated thermal insulating board (9) and covered by the enveloping film, so that a heat flow will be produced which is influenced by the thermal conductivity of the test layer (4) varying itself in dependence on the gas pressure within the interior of the thermal insulating board (9), whereby the value of this heat flow is taken by measurement techniques or is indirectly determined from other values taken by measurement techniques.

6. Procedure according to claim 5, whereby a sensor body (5) with a contact surface at its front is placed from the outside above a test apparatus (3,4) according to one of the claims 1 to 4,which is situated in the evacuated thermal insulating board (9) and enclosed by an enveloping film (2), whereby the curvature of the forward contact surface approximately corresponds to the curvature of the test layer (4) beneath the enveloping film (2).

7. Procedure according to claim 5 or 6, whereby a sensor body (5) with a significant temperature difference relative to the test apparatus (3,4) is placed onto the enveloping film (2).

8. Procedure according to one of the claims 5 to 7, whereby the sensor body (5) has a thermal conductivity between 1 W/(m*K) and 1000 W/(m*K).

9. Procedure according to one of the claims 5 to 8 using a temperature sensor (6) which is fastened at a surface or in the volume of the sensor body (5), whereby a heat flow is ascertained by means of the temperature variation (over time) of the sensor body (5) measured when attached to the area of the insulating board (9) above the heat sink (3).

10. Procedure according to one of the claims 5 to 9, whereby the sensor body (5) is regulated at a constant temperature that differs clearly from the temperature of the heat sink (3).

11. Procedure according to claim 10, whereby the heat flow is determined through the thermal power applied to the sensor body at a temperature held constant.

12. Procedure according to one of the claims 5 to 11, whereby a heat flow meter is mounted on the contact surface of the sensor body (5) to measure heat flow, and the temperature of the sensor body is held constant.

13. Procedure according to claim 5, whereby a heating film with a temperature probe is pressed onto the enveloping film above the test apparatus (3,4).

14. Procedure according to claim 13, whereby at the beginning of the measurement a heating power output in the heating film is switched on, and is regulated in such a way that its heat output can be measured, while the temperature of the heating film is kept constant.

15. Procedure according to one of the claims 13 to 14, whereby the heating film is covered by an insulating material.

16. Procedure according to claim 15, whereby the heat loss of the heat foil to the surroundings is reduced by means of a further, controllable heating mechanism above the insulating material, so that its thermal power output substantially corresponds to the heat flow to the heat sink.

## Revendications

1. Dispositif pour un procédé de mesure thermique destiné à la détermination de la pression gazeuse dans une plaque calorifuge (9) mise sous vide, comportant une âme isolante (1) enveloppée d'une feuille (2), dispositif dans lequel est présente une structure insérée entre l'âme isolante (1) et la feuille d'enveloppement (2) de la plaque calorifuge (9) et comportant un corps (3) faisant office de puits de chaleur, dont la conductivité thermique et la capacité calorifique, rapportée au volume, sont plus grandes que les grandeurs concernées de l'âme isolante (1), ainsi qu'une couche d'essai (4) disposée entre le cops (3) et la feuille métallique d'enveloppement (2) et ayant une conductivité thermique définie, qui se modifie en tant que fonction de la pression gazeuse dans la plaque calorifuge (9) mise sous vide.

2. Dispositif selon la revendication 1, dans lequel la conductivité thermique du puits de chaleur (3) se situe au-dessus de 1 W/(m*K), de préférence à plus de 2 W/(m*K), notamment à plus de 10 W/(m*K).

3. Dispositif selon la revendication 1 ou 2, dans lequel la conductivité thermique du puits de chaleur (3) est plus de 10 fois, de préférence 20 fois, notamment 50 fois, plus grande que la conductivité thermique de la couche d'essai (4), à une pression gazeuse de moins de 100 mbars.

4. Dispositif selon l'une des revendications 1 à 3, dans lequel la conductivité thermique de la couche d'essai (4), à la pression gazeuse atmosphérique ou en dessous de celle-ci, se situe au-dessous de 1 W/(m*K), de préférence au-dessous de 0,1 W/(m*K), notamment au-dessous de 0,05 W/(m*K).

5. Procédé pour la détermination de la pression gazeuse dans une plaque calorifuge (9) enveloppée d'une feuille et mise sous vide, suivant lequel, à un dispositif (3, 4) selon l'une des revendications précédentes, placé dans la plaque calorifuge (9) mise sous vide et recouvert par la feuille métallique d'enveloppement (2), est imprimé, de l'extérieur, un saut de température par rapport au puits de chaleur (3), de sorte qu'est induit un flux de chaleur sur lequel influe la conductivité thermique, variant en fonction de la pression gazeuse à l'intérieur de la plaque calorifuge (9), de la couche d'essai (4), et dont l'amplitude est détectée par des techniques de mesure ou est déterminée indirectement à partir d'autres grandeurs détectables par des techniques de mesure.

6. Procédé selon la revendication 5, suivant lequel un corps de détection (5), présentant une surface de contact frontale, est appliqué de l'extérieur par dessus un dispositif d'essai (3, 4) selon l'une des revendications 1 à 4, placé dans la plaque calorifuge (9) mise sous vide et recouvert par la feuille métallique d'enveloppement (2), le cintrage de la surface de contact frontale correspondant sensiblement au cintrage de la couche d'essai (4) au-dessous de la feuille d'enveloppement (2).

7. Procédé selon la revendication 5 ou 6, suivant lequel un corps de détection ayant une nette différence de température vis-à-vis du dispositif d'essai (3, 4), est posé sur la feuille métallique d'enveloppement (2).

8. Procédé selon l'une des revendications 5 à 7, suivant lequel le corps de détection (5) présente une conductivité thermique de 1 W/(m*K) à 1000 W/(m*K).

9. Procédé selon l'une des revendications 5 à 8, faisant appel à un détecteur de température (6) qui est fixé à une surface libre ou dans le volume du corps de détection (5), suivant lequel le flux de chaleur est déterminé à l'aide du changement de température (dans le temps) du corps de détection (5) lors de l'application/du pressage contre la région de la plaque calorifuge (9) située au-dessus du puits de chaleur (3).

10. Procédé selon l'une des revendications 5 à 9, suivant lequel le corps de détection est réglé à une température constante, qui diffère nettement de la température du puits de chaleur (3).

11. Procédé selon la revendication 10, suivant lequel le flux de chaleur est déterminée par l'intermédiaire de la puissance calorifique apportée au corps de détection (5), à une température devant être maintenue constante.

12. Procédé selon l'une des revendications 5 à 11, suivant lequel un fluxmètre calorifique est apposé sur la surface de contact du corps de détection (5), pour la mesure du flux de chaleur, et la température du corps de détection est maintenue constante.

13. Procédé selon la revendication 5, suivant lequel une feuille chauffante est appliquée et pressée sur la feuille métallique d'enveloppement (2), avec un capteur de température au-dessus du dispositif d'essai (3, 4).

14. Procédé selon la revendication 13, suivant lequel, au début de la mesure, une puissance calorifique est introduite, par mise sous tension, dans la feuille chauffante et est réglée de telle façon qu'à une température, demeurant constante, de la feuille chauffante, la puissance calorifique de cette dernière puisse être mesurée.

15. Procédé selon l'une des revendications 13 ou 14, suivant lequel la feuille chauffante est recouverte d'un matériau isolant.

16. Procédé selon la revendication 15, suivant lequel à l'aide d'un système de chauffage supplémentaire, réglable, par-dessus le matériau isolant, la déperdition de chaleur de la feuille chauffante dans l'environnement est diminue de telle façon que sa puissance calorifique corresponde sensiblement au flux de chaleur en direction du puits de chaleur.
